# EUROPÄISCHE PATENTSCHRIFT

(11) **EP 3 366 146 B1**
(45) Veröffentlichungstag und Bekanntmachung des Hinweises auf die Patenterteilung: **24.06.2020**
(21) Anmeldenummer: 18153111.2
(22) Anmeldetag: 24.01.2018
(51) Int. Cl.: A23L 3/015, A01M 13/00, A01M 17/00, A23L 3/3409, A61L 2/00, A61L 2/20, B01D 53/00

(54) **VORRICHTUNG UND VERFAHREN ZUR BEHANDLUNG VON LEBENSMITTELN**
DEVICE AND METHOD FOR PROCESSING FOOD
DISPOSITIF ET PROCÉDÉ DE TRAITEMENT DE DENRÉES ALIMENTAIRES

(30) Priorität: 23.02.2017 DE 102017103793
(43) Veröffentlichungstag der Anmeldung: 29.08.2018
(73) Patentinhaber: Natura Foodtec Holding B.V., 6598 DL Heijen (NL)
(72) Erfinder:
(74) Vertreter: Manitz Finsterwald Patent- und Rechtsanwaltspartnerschaft mbB

(56) Entgegenhaltungen:
- EP-A1- 0 474 324
- EP-A1- 1 092 348
- DE-A1- 2 745 961
- DE-A1- 2 921 706
- DE-A1- 3 445 990
- DE-A1- 10 107 836
- DE-C1- 4 138 321
- DE-C1- 4 236 622
- US-A- 4 130 393
- US-A- 4 822 563
- US-A- 5 365 692

## Beschreibung

Die vorliegende Erfindung betrifft ein Verfahren zur Behandlung von Lebensmitteln, bei dem die Lebensmittel in einer gasdicht verschließbaren Behandlungskammer, in der sich ein unter erhöhtem Druck stehendes Schutzgas befindet, für eine vorgegebene Zeitdauer gelagert werden, wobei das Schutzgas nach einem Lagerungsvorgang aus der Behandlungskammer abgeführt wird und die Behandlungskammer für einen nachfolgenden Lagerungsvorgang von neuem mit Schutzgas befüllt wird.

Derartige Verfahren werden beispielsweise zum Konservieren und/oder Aromatisieren von Lebensmitteln wie Fleisch, Fisch, Gemüse oder Salat eingesetzt. Bei dem Schutzgas kann es sich um Sauerstoff, Stickstoff, Schwefeldioxid, Argon, Helium, Wasserstoff, Distickstoffmonoxid oder eine Kombination dieser Gase handeln. Insbesondere werden Verfahren der eingangs genannten Art bei der sogenannten Druckentwesung unter Verwendung von Kohlendioxid als Schutzgas eingesetzt. Die Druckentwesung dient dazu, tierische Schädlinge wie Milben, Larven, Eier und dergleichen in Lebensmitteln wie zum Beispiel Müsli, Körner und Früchten abzutöten. Bei der Druckentwesung werden die zu behandelnden Lebensmittel in die Behandlungskammer gebracht, welche anschließend mit Kohlendioxid gefüllt wird. Für eine optimale Wirkung ist es erwünscht, dass das Kohlendioxid in der Behandlungskammer unter erhöhtem Druck steht, d.h. unter einem Druck, der höher ist als der Atmosphärendruck. Die Behandlungskammer ist deshalb vorzugsweise als Druckkammer ausgeführt.

Nach der Behandlung muss die Behandlungskammer geöffnet werden, um eine Entnahme der behandelten Lebensmittel sowie ein Einlagern neuer Lebensmittel zu ermöglichen. Vor einem Öffnen und Betreten der Behandlungskammer ist das Kohlendioxid zu entfernen. Beispielsweise kann das Kohlendioxid in die Atmosphäre abgelassen werden. Die damit verbundene Umweltbelastung ist jedoch beträchtlich. Für den Betreiber einer Druckentwesungsanlage ergeben sich außerdem durch den Verbrauch von Kohlendioxid relativ hohe Betriebskosten. Bei anderen Arten von Schutzgasen können die Kosten sogar noch höher sein.

Die EP 0 474 324 A1 offenbart ein Entseuchungsverfahren für pflanzliche Produkte, das auf einer Erzeugung von Embolien in den tierischen Schädlingen infolge einer schnellen Dekompression beruht.

In der DE 101 07 836 A1 ist eine Druckentwesungsanlage offenbart, bei dem das verwendete Kohlendioxid für eine Rückgewinnung verflüssigt und einem Vorratsbehälter zugeführt wird.

Die US 5 365 692 A offenbart ein Entwesungsverfahren, bei dem eine Kombination aus Dekompression und toxischem Gas zum Einsatz kommt.

Es ist eine Aufgabe der Erfindung, bei der Behandlung von Lebensmitteln mit Schutzgas die Umweltbelastung und den Schutzgasverbrauch zu verringern.

Die Lösung der Aufgabe erfolgt durch ein Verfahren mit den Merkmalen des Anspruchs 1.

Erfindungsgemäß wird für eine Schutzgas-Rückgewinnung
(i) wenigstens ein Teil des aus der Behandlungskammer abzuführenden Schutzgases mittels einer Pumpe in einen Pufferbehälter gefördert und
(ii) für den nachfolgenden Lagerungsvorgang mittels einer Pumpe Schutzgas aus dem Pufferbehälter in die Behandlungskammer gefördert.

Das aus der Behandlungskammer abzuführende Schutzgas wird also nicht einfach in die Umgebung abgelassen, sondern in einem Pufferbehälter zwischengespeichert und später wiederverwendet. Dadurch kann der Verbrauch an Schutzgas beträchtlich gesenkt werden. Außerdem wird die Umwelt nicht durch große Mengen an abgelassenem Schutzgas belastet. Durch den Einsatz der Pumpe kann eine vergleichsweise große Menge Schutzgas von der Behandlungskammer in den Pufferbehälter gefördert werden oder umgekehrt von dem Pufferbehälter in die Behandlungskammer. Das heißt es ist eine wesentlich effektivere Rückgewinnung von Schutzgas erzielbar als dies durch einen bloßen Druckausgleich zwischen der Behandlungskammer und dem Pufferbehälter möglich ist. Bei der Pumpe kann es sich insbesondere um eine Druckerhöhungsvorrichtung handeln, die speziell zum Erhöhen des Drucks in dem mit der Ausgangsseite verbundenen Behälter ausgelegt ist.

Eine Ausführungsform der Erfindung sieht vor, dass zum Abführen des Schutzgases aus der Behandlungskammer zunächst bei bestehendem Druckgefälle zum Pufferbehälter ein Druckausgleich zwischen der Behandlungskammer und dem Pufferbehälter herbeigeführt wird und erst danach mittels der Pumpe weiteres Schutzgas in den Pufferbehälter gefördert wird.

Alternativ oder zusätzlich kann vorgesehen sein, dass zum Befüllen der Behandlungskammer mit Schutzgas zunächst bei bestehendem Druckgefälle zur Behandlungskammer ein Druckausgleich zwischen dem Pufferbehälter und der Behandlungskammer herbeigeführt wird und erst danach mittels der Pumpe weiteres Schutzgas in die Behandlungskammer gefördert wird. Der Druckausgleich kann herbeigeführt werden, indem ein Ventil, das in einer die Behandlungskammer mit dem Pufferbehälter verbindenden Leitung vorgesehen ist, geöffnet wird. Die Pumpe wird also vorzugsweise erst dann eingesetzt, wenn es notwendig ist, d. h. wenn von sich aus kein weiteres Schutzgas in den zu befüllenden Raum gelangt.

Die Erfindung sieht vor, dass das Fördern von abzuführendem Schutzgas aus der Behandlungskammer in den Pufferbehälter einerseits und das Fördern von Schutzgas aus dem Pufferbehälter in die Behandlungskammer andererseits mittels der gleichen Pumpe durchgeführt wird. Das Bereitstellen einer weiteren Pumpe ist dann nicht erforderlich. Die Beschränkung auf eine Pumpe ist in einfacher Weise dadurch möglich, dass Bypass-Leitungen mit jeweiligen absperrbaren Ventilen vorgesehen werden. Grundsätzlich könnte auch eine in beiden Richtungen betreibbare Pumpe in eine Verbindungsleitung zwischen der Behandlungskammer und dem Pufferbehälter eingesetzt werden.

Es kann vorgesehen sein, dass in Schritt (i) mittels der Pumpe ein Speicherdruck in dem Pufferbehälter aufgebaut wird, der wenigstens 9 bar, bevorzugt wenigstens 17 bar, weiter bevorzugt wenigstens 25 bar und besonders bevorzugt etwa 28 bar oder mehr beträgt. Dies ermöglicht das Zwischenspeichern einer besonders großen Menge an Schutzgas in dem Pufferbehälter.

Eine weitere Ausführungsform der Erfindung sieht vor, dass in Schritt (i) mittels der Pumpe ein Speicherdruck in dem Pufferbehälter aufgebaut wird, der wenigstens 70%, bevorzugt wenigstens 80% und besonders bevorzugt wenigstens 90% des für eine Behandlung vorgesehenen Betriebsdrucks der Behandlungskammer beträgt.

Eine weitere Ausführungsform der Erfindung sieht vor, dass das Fördern von Schutzgas aus der Behandlungskammer in den Pufferbehälter in Schritt (i) nach Erreichen des Speicherdrucks in dem Pufferbehälter beendet wird und nach dem Beenden des Förderns eine Ablassöffnung der Behandlungskammer geöffnet wird, um restliches Schutzgas, insbesondere gesteuert, in die Atmosphäre abzulassen. Das Ablassen kann durch Öffnen eines entsprechenden Ventils erfolgen. Da die Menge des restlichen Schutzgases aufgrund des vorangegangenen Pumpvorgangs relativ gering ist, ist ein Ablassen in die Atmosphäre weitgehend unproblematisch. Nach dem Ablassen des restlichen Schutzgases ist die Behandlungskammer drucklos. Bevorzugt wird dann ein Belüftungsvorgang durchgeführt, um noch in der Behandlungskammer vorhandenes Schutzgas durch Umgebungsluft zu ersetzen. Sobald die Behandlungskammer weitgehend frei von Schutzgas ist, kann sie für eine Entnahme der behandelten Lebensmittel und ggf. für eine Neubeschickung mit zu behandelnden Lebensmitteln geöffnet und betreten werden.

Gemäß einer weiteren Ausführungsform der Erfindung wird in Schritt (ii) mittels der Pumpe ein Vorverdichtungsdruck in der Behandlungskammer aufgebaut, der wenigstens 9 bar, bevorzugt wenigstens 17 bar, weiter bevorzugt wenigstens 25 bar und besonders bevorzugt etwa 28 bar oder mehr beträgt.

Gemäß einer weiteren Ausführungsform der Erfindung wird in Schritt (ii) mittels der Pumpe ein Vorverdichtungsdruck in der Behandlungskammer aufgebaut, der wenigstens 70%, bevorzugt wenigstens 80% und besonders bevorzugt wenigstens 90% des für eine Behandlung vorgesehenen Betriebsdrucks der Behandlungskammer beträgt. Dadurch ist sichergestellt, dass eine relativ große Menge an Schutzgas aus dem Pufferbehälter wiederverwendet wird.

Eine weitere Ausführungsform der Erfindung sieht vor, dass das Fördern von Schutzgas aus dem Pufferbehälter in die Behandlungskammer in Schritt (ii) nach Erreichen des Vorverdichtungsdrucks in der Behandlungskammer beendet wird und nach dem Beenden des Förderns eine Verbindung der Behandlungskammer mit einer Schutzgasquelle hergestellt wird, um ausgehend vom Vorverdichtungsdruck einen Betriebsdruck aufzubauen, bevorzugt einen Betriebsdruck von wenigstens 10 bar, weiter bevorzugt einen Betriebsdruck von wenigstens 18 bar und besonders bevorzugt einen Betriebsdruck zwischen 20 bar und 40 bar. Bei der Schutzgasquelle kann es sich um einen unter Druck stehenden Vorratstank wie zum Beispiel einen Flüssiggastank oder um einen Anschluss an eine übergeordnete Gasversorgung handeln. Über die Schutzgasquelle kann derjenige, vergleichsweise geringe Anteil an Schutzgas, der durch Ablassen in die Atmosphäre verbraucht wurde, dem System wieder zugeführt werden.

Gemäß einer weiteren Ausführungsform der Erfindung wird die Behandlungskammer vor einer Befüllung mit Schutzgas verschlossen und der Druck in der Behandlungskammer wird mittels einer Vakuumpumpe gegenüber dem Atmosphärendruck abgesenkt, vorzugsweise bis zu einem Restdruck von höchstens ca. 50 mbar. Dies ermöglicht ein besonders effektives Entfernen der Atmosphärenluft aus der Behandlungskammer. Eine Verunreinigung der Schutzgasatmosphäre durch Atmosphärenluft wird somit auf ein Minimum reduziert. Insbesondere kann aufgrund der Verwendung einer Vakuumpumpe auf ein Spülen der Behandlungskammer verzichtet werden. Ein solches Spülen ist insofern nachteilig, als dabei unweigerlich eine gewisse Menge an Schutzgas gemeinsam mit der Atmosphärenluft aus der Behandlungskammer gespült wird, wodurch sich der Schutzgasverbrauch erhöht. Grundsätzlich ist es aber auch möglich, die Behandlungskammer durch Spülen zu reinigen. Im Prinzip kann sogar auf das Spülen verzichtet werden. Die restliche Luft in der Behandlungskammer bewirkt dann eine Verunreinigung des Schutzgases in einem gewissen Umfang, was aber unter Umständen hinnehmbar ist.

Die Erfindung betrifft auch eine Vorrichtung zur Behandlung von Lebensmitteln, insbesondere mittels eines wie vorstehend beschriebenen Verfahrens.

Eine erfindungsgemäße Vorrichtung umfasst eine gasdicht verschließbare Behandlungskammer zum Lagern der Lebensmittel für eine vorgegebene Zeitdauer in einer Atmosphäre aus einem unter erhöhtem Druck stehenden Schutzgas, einen Anschluss für eine Schutzgasquelle zum Befüllen der Behandlungskammer mit Schutzgas, einen Pufferbehälter, der über wenigstens eine absperrbare Verbindungsleitung mit der Behandlungskammer verbindbar ist, und eine Pumpe, die mit der Behandlungskammer und mit dem Pufferbehälter in Verbindung steht und in der Lage ist, je nach Betriebszustand der Vorrichtung Schutzgas aus der Behandlungskammer in den Pufferbehälter zu fördern oder umgekehrt Schutzgas aus dem Pufferbehälter in die Behandlungskammer zu fördern. Mittels des Pufferbehälters und der Pumpe ist eine effektive Rückgewinnung von Schutzgas möglich.

Der Rauminhalt des Pufferbehälters kann wenigstens 10% und höchstens 90%, vorzugsweise wenigstens 25% und höchstens 75% des Rauminhalts der Behandlungskammer betragen. Insbesondere ist es bevorzugt, dass der Pufferbehälter etwa die Menge an Schutzgas aufnehmen kann, die sich während einer Behandlung in der Behandlungskammer befindet. Diese ist gegenüber dem Rauminhalt der Behandlungskammer um den Rauminhalt der zu lagernden Lebensmittel sowie der zugehörigen Trägergestelle verringert. Eine Vorrichtung, bei welcher die Behandlungskammer und der Pufferbehälter unter Betriebsbedingungen mit eingelagerten Lebensmitteln im Wesentlichen die gleiche Menge an Schutzgas aufnehmen können, hat sich als besonders günstig erwiesen.

Vorzugsweise ist die Pumpe mehrstufig, um eine effektive Druckerhöhung zu ermöglichen.

Die Pumpe kann dafür ausgelegt sein, in der Behandlungskammer einen Vorverdichtungsdruck von wenigstens 9 bar, bevorzugt von wenigstens 17 bar, weiter bevorzugt von wenigstens 25 bar und besonders bevorzugt von etwa 28 bar oder mehr aufzubauen und/oder dass die Pumpe dafür ausgelegt ist, in der Behandlungskammer einen Vorverdichtungsdruck von wenigstens 70%, bevorzugt von wenigstens 80% und besonders bevorzugt von wenigstens 90% des für eine Behandlung vorgesehenen Betriebsdrucks der Behandlungskammer aufzubauen.

Die Pumpe kann auch dafür ausgelegt sein, in dem Pufferbehälter einen Speicherdruck von wenigstens 9 bar, bevorzugt von wenigstens 17 bar, weiter bevorzugt von wenigstens 25 bar und besonders bevorzugt von etwa 28 bar oder mehr aufzubauen, wobei die Pumpe alternativ oder zusätzlich dafür ausgelegt sein kann, in dem Pufferbehälter einen Speicherdruck von wenigstens 70%, bevorzugt von wenigstens 80% und besonders bevorzugt von wenigstens 90% des für eine Behandlung vorgesehenen Betriebsdrucks der Behandlungskammer aufzubauen.

Eine derart leistungsfähige Pumpe ermöglicht eine besonders effektive Schutzgas-Rückgewinnung.

Der Pufferbehälter kann eine Anordnung aus mehreren miteinander verbundenen Einzelbehältern umfassen. Als Einzelbehälter können insbesondere kostengünstig erhältliche Standard-Komponenten, wie zum Beispiel Gasbündel, verwendet werden. Durch Vorsehen mehrerer miteinander verbundener Einzelbehälter können die Herstellungskosten der Anlage verringert werden.

Eine spezielle Ausgestaltung der Erfindung sieht vor, dass die Behandlungskammer an eine Schutzgasquelle angeschlossen ist. Die Schutzgasquelle kann einen Vorratstank, insbesondere einen Flüssiggastank mit einem Verdampfer, umfassen.

Vorzugsweise ist die Schutzgasquelle dafür ausgelegt, in der Behandlungskammer einen Betriebsdruck von wenigstens 10 bar, bevorzugt einen Betriebsdruck von wenigstens 18 bar und besonders bevorzugt einen Betriebsdruck zwischen 20 bar und 40 bar aufzubauen. Ein Betrieb der Anlage bei einem solchen Betriebsdruck hat sich als besonders effizient erwiesen.

Weiterbildungen der Erfindung sind auch den abhängigen Ansprüchen, der Beschreibung sowie der beigefügten Zeichnung entnehmbar.

Die Erfindung wird nachfolgend beispielhaft unter Bezugnahme auf die Zeichnung beschrieben.

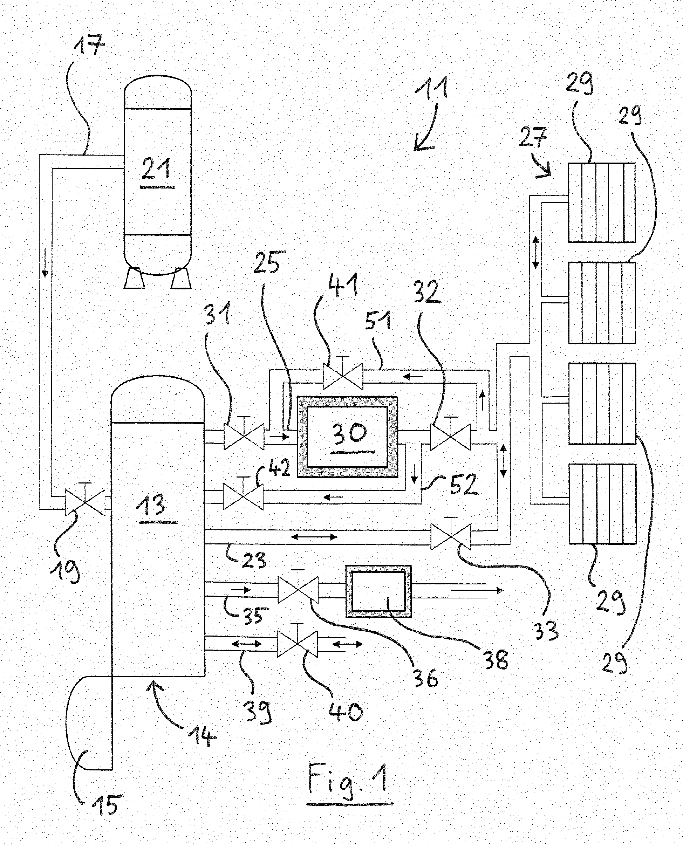

- Fig. 1: ist eine vereinfachte Darstellung einer erfindungsgemäßen Vorrichtung zur Behandlung von Lebensmitteln.

Die in Fig. 1 gezeigte Vorrichtung 11 ist als Druckentwesungsanlage ausgeführt und dient zur Behandlung von Lebensmitteln wie z. B. Müsli und Obst mit unter Druck gesetztem Kohlendioxid. Prinzipiell ist die Vorrichtung 11 jedoch auch für eine Behandlung von Lebensmitteln mit einem anderen Schutzgas als Kohlendioxid, beispielsweise mit Stickstoff oder Helium, geeignet.

Die Vorrichtung 11 umfasst eine gasdicht verschließbare Behandlungskammer 13, welche als Druckkammer ausgeführt und für einen Betriebsdruck von etwa 30 bar ausgelegt ist. Vorzugsweise ist die Behandlungskammer 13 aus Stahl gefertigt. Der Rauminhalt der Behandlungskammer 13 kann 10 m³ und mehr betragen. Über eine Öffnung 14 der Behandlungskammer 13 können zu behandelnde Lebensmittel, beispielsweise auf einem Trägergestell, in die Behandlungskammer 13 eingebracht werden. Mittels einer Tür 15 ist die Öffnung 14 gasdicht verschließbar. Über eine Zufuhrleitung 17, die mittels eines Zufuhrventils 19 verschließbar ist, ist die Behandlungskammer 13 an eine Kohlendioxidquelle in Form eines Vorratstanks 21 angeschlossen. Weiterhin steht die Behandlungskammer 13 über eine Druckausgleichsleitung 23 und eine Förderleitung 25 mit einem Pufferbehälter 27 in Verbindung, der bei dem dargestellten Ausführungsbeispiel vier miteinander verbundene Einzelbehälter 29 umfasst. Bei den Einzelbehältern 29 kann es sich um handelsübliche Gasbündel handeln. Der Pufferbehälter 27 weist vorzugsweise einen Rauminhalt auf, der etwa 50% des Rauminhalts der Behandlungskammer 13 beträgt.

Die Förderleitung 25 ist mit einer Druckerhöhungsvorrichtung in Form einer mehrstufigen Pumpe 30 vorgesehen. Die Förderleitung 25 ist mittels eines ersten Pumpenventils 31 zwischen der Behandlungskammer 13 und der Pumpe 30 verschließbar. Weiterhin ist die Förderleitung 25 mittels eines zweiten Pumpenventils 32 zwischen der Pumpe 30 und dem Pufferbehälter 27 verschließbar. Eine erste Bypass-Leitung 51 dient zur Umgehung der Pumpe 30 sowie des zweiten Pumpenventils 32 und ist mittels eines dritten Pumpenventils 41 verschließbar. Weiterhin ist eine zweite Bypass-Leitung 52 vorgesehen, die zur Umgehung der Pumpe 30 sowie des ersten Pumpenventils 31 dient und mittels eines vierten Pumpenventils 42 verschließbar ist. Auf die Bypass-Leitungen 51, 52 kann verzichtet werden, wenn eine in beiden Richtungen betreibbare Pumpe verwendet wird. Die Druckausgleichsleitung 23 ist mittels eines Ausgleichsventils 33 verschließbar. Eine Saugleitung 35 mit einer Vakuumpumpe 38 führt vom Inneren der Behandlungskammer 13 in die Atmosphäre. Die Saugleitung 35 ist mittels eines Saugleitungsventils 36 verschließbar. Zusätzlich ist bei dem gezeigten Ausführungsbeispiel eine Ablassleitung 39 vorgesehen, die vom Inneren der Behandlungskammer 13 in die Atmosphäre führt und mittels eines Ablassventils 40 verschließbar ist.

In dem Vorratstank 21 befindet sich ein Vorrat an Kohlendioxid, vorzugsweise in verflüssigter Form. Dem Vorratstank 21 kann demgemäß ein Verdampfer zugeordnet sein, der in Fig. 1 jedoch nicht dargestellt ist. Aus dem Vorratstank 21 kann Kohlendioxid mit einem Druck, der deutlich höher als der Atmosphärendruck und deutlich höher als der in der Behandlungskammer 13 zu erzeugende Betriebsdruck von etwa 30 bar ist, über die Zufuhrleitung 17 bereitgestellt werden. Alle vorgesehenen Ventile 19, 31, 32, 33, 36, 40, 41 und 42 sind vorzugsweise als Magnetventile oder als pneumatisch oder elektrisch angesteuerte Motorkugelhähne ausgeführt.

Die Vorrichtung 11 wird zur Durchführung eines erfindungsgemäßen Verfahrens folgendermaßen betrieben:
Nach der Beschickung der Behandlungskammer 13 mit Lebensmitteln wird die Tür 15 geschlossen und verriegelt. Anschließend wird das Saugleitungsventil 36 geöffnet und die Vakuumpumpe 38 in Betrieb gesetzt. Die in der Behandlungskammer 13 befindliche Atmosphärenluft wird mittels der Vakuumpumpe 39 solange abgesaugt, bis der Restdruck in der Behandlungskammer 13 etwa 50 mbar beträgt. Nach Erreichen dieses Restdrucks wird das Saugleitungsventil 36 geschlossen und das Zufuhrventil 19 geöffnet, um die Behandlungskammer 13 mit Kohlendioxid aus dem Vorratstank 21 zu füllen. Das Befüllen wird solange durchgeführt, bis in der Behandlungskammer 13 ein Betriebsdruck von etwa 30 bar aufgebaut ist. Dann wird das Zufuhrventil 19 geschlossen und die Vorrichtung 11 wird in dem erreichten Zustand belassen, bis die für die Druckentwesung vorgegebene Zeitdauer verstrichen ist, das heißt bis ein bestimmungsgemäßer Lagerungsvorgang abgeschlossen ist.

Nach Abschluss des Lagerungsvorgangs wird das Ausgleichsventil 33 geöffnet, vorzugsweise gesteuert, um einen Druckausgleich zwischen der Behandlungskammer 13 und dem Pufferbehälter 27 herbeizuführen. Nach der Durchführung des Druckausgleichs herrscht sowohl in der Behandlungskammer 13 als auch im Pufferbehälter 27 ein Druck von etwa 15 bar. Nach Erreichen dieses Zustands wird das Ausgleichsventil 33 geschlossen und die beiden Pumpenventile 31, 32 werden geöffnet. Mittels der Pumpe 30 wird Kohlendioxid aus der Behandlungskammer 13 in den Pufferbehälter 27 gefördert, bis der Druck in der Behandlungskammer 13 auf einen Restdruck von etwa 2 bar abgesunken ist und der Druck in dem Pufferbehälter 27 auf einen Speicherdruck von etwa 28 bar angestiegen ist. Nach Erreichen dieses Zustands werden die Pumpenventile 31, 32 geschlossen und das Ablassventil 40 wird geöffnet. Dadurch entweicht Kohlendioxid aus der Behandlungskammer 13 in die Atmosphäre, bis der Druck in der Behandlungskammer 13 dem Atmosphärendruck entspricht.

Nachdem der Druck in der Behandlungskammer 13 den Atmosphärendruck erreicht hat, wird das Ablassventil 40 geöffnet und die Vakuumpumpe 38 eingeschaltet. Über das geöffnete Ablassventil 40 wird während der nachfolgenden Absaugphase die kohlendioxidhaltige Atmosphäre der Behandlungskammer 13 durch Umgebungsluft ausgetauscht. Die Vakuumpumpe 38 bleibt solange eingeschaltet und das Ablassventil 40 bleibt solange geöffnet, bis in der Behandlungskammer 13 weniger als 2% Kohlendioxid vorhanden ist. Danach kann die Tür 15 für eine Entnahme der behandelten Lebensmittel und für eine Neubeschickung der Behandlungskammer 13 mit zu behandelnden Lebensmitteln entriegelt und geöffnet werden.

Anschließend wird das Ablassventil 40 geschlossen und das Saugleitungsventil 35 wird geöffnet. Mittels der Vakuumpumpe 38 wird wiederum ein Unterdruck von etwa 50 mbar in der Behandlungskammer 13 erzeugt. Sobald der gewünschte Restdruck in der Behandlungskammer 13 erreicht ist, wird das Ausgleichsventil 33 geöffnet, um einen Druckausgleich zwischen der Behandlungskammer 13 und dem Pufferbehälter 27 herbeizuführen. Es strömt dann Kohlendioxid von dem Pufferbehälter 27 in die Behandlungskammer 13, bis sowohl in der Behandlungskammer 13 als auch in dem Pufferbehälter 27 ein Druck von etwa 14 bar herrscht.

Im Weiteren wird das Ausgleichsventil 33 wieder geschlossen und das dritte Pumpenventil 41 sowie das vierte Pumpenventil 42 werden geöffnet. Mittels der Pumpe 30 wird Kohlendioxid aus dem Pufferbehälter 27 in die Behandlungskammer 13 gefördert, bis der Druck in der Behandlungskammer 13 auf etwa 28 bar angestiegen ist und der Druck in dem Pufferbehälter 27 auf etwa 2 bar abgesunken ist. Nach Erreichen dieses Zustands werden die Pumpenventile 41, 42 geschlossen. Schließlich wird das Zufuhrventil 19 geöffnet, um solange Kohlendioxid aus dem Flüssiggastank 21 in die Behandlungskammer 13 nachzufüllen, bis in der Behandlungskammer 13 wieder der bestimmungsgemäße Betriebsdruck von etwa 30 bar erreicht ist. Die Vorrichtung 11 ist dann bereit für einen neuen Lagerungsvorgang.

Dadurch dass das in der Behandlungskammer 13 vorhandene Kohlendioxid nach einem Behandlungsvorgang nicht einfach in die Atmosphäre abgelassen wird, sondern in einem bei jedem Arbeitsgang nahezu vollständig befüll- und entleerbaren Pufferbehälter zwischengespeichert und später wiederverwendet wird, ergibt sich eine beträchtliche Reduzierung der Umweltbelastung sowie eine erhebliche Kosteneinsparung beim Betrieb von Druckentwesungsanlagen. Die Pumpe 30 sorgt hierbei dafür, dass ein besonders hoher Anteil des eingesetzten Kohlendioxids einer Wiederverwendung zugeführt wird. Experimente haben gezeigt, dass sich durch ein erfindungsgemäßes Verfahren eine Kohlendioxid-Ersparnis von mehr als 50% und sogar von etwa 80% erzielen lässt.

### Bezugszeichenliste

- 11: Vorrichtung zur Behandlung von Lebensmitteln
- 13: Behandlungskammer
- 14: Öffnung
- 15: Tür
- 17: Zufuhrleitung
- 19: Zufuhrventil
- 21: Vorratstank
- 23: Druckausgleichsleitung
- 25: Förderleitung
- 27: Pufferbehälter
- 29: Einzelbehälter
- 30: Pumpe
- 31: erstes Pumpenventil
- 32: zweites Pumpenventil
- 33: Ausgleichsventil
- 35: Saugleitung
- 36: Saugleitungsventil
- 38: Vakuumpumpe
- 39: Ablassleitung
- 40: Ablassventil
- 41: drittes Pumpenventil
- 42: viertes Pumpenventil
- 51: erste Bypass-Leitung
- 52: zweite Bypass-Leitung

## Patentansprüche

1. Verfahren zur Behandlung von Lebensmitteln, bei dem die Lebensmittel in einer gasdicht verschließbaren Behandlungskammer (13), in der sich ein unter erhöhtem Druck stehendes Schutzgas befindet, für eine vorgegebene Zeitdauer gelagert werden, wobei das Schutzgas nach einem Lagerungsvorgang aus der Behandlungskammer (13) abgeführt wird und die Behandlungskammer (13) für einen nachfolgenden Lagerungsvorgang von neuem mit Schutzgas befüllt wird,
wobei für eine Schutzgas-Rückgewinnung
(i) wenigstens ein Teil des aus der Behandlungskammer (13) abzuführenden Schutzgases mittels einer Pumpe (30) in einen Pufferbehälter (27) gefördert wird
dadurch g**ekennzeichnet**, dass
(ii) für den nachfolgenden Lagerungsvorgang mittels einer Pumpe (30) Schutzgas aus dem Pufferbehälter (27) in die Behandlungskammer (13) gefördert wird, wobei das Fördern von abzuführendem Schutzgas aus der Behandlungskammer (13) in den Pufferbehälter (27) einerseits und das Fördern von Schutzgas aus dem Pufferbehälter (27) in die Behandlungskammer (13) andererseits mittels der gleichen Pumpe (30) durchgeführt wird.

2. Verfahren nach Anspruch 1,
**dadurch gekennzeichnet, dass**
zum Abführen des Schutzgases aus der Behandlungskammer (13) zunächst bei bestehendem Druckgefälle zum Pufferbehälter (27) ein Druckausgleich zwischen der Behandlungskammer (13) und dem Pufferbehälter (27) herbeigeführt wird und erst danach mittels der Pumpe (30) weiteres Schutzgas in den Pufferbehälter (27) gefördert wird.

3. Verfahren nach Anspruch 1 oder 2,
**dadurch gekennzeichnet, dass**
zum Befüllen der Behandlungskammer (13) mit Schutzgas zunächst bei bestehendem Druckgefälle zur Behandlungskammer (13) ein Druckausgleich zwischen dem Pufferbehälter (27) und der Behandlungskammer (13) herbeigeführt wird und erst danach mittels der Pumpe (30) weiteres Schutzgas in die Behandlungskammer (13) gefördert wird.

4. Verfahren nach zumindest einem der vorstehenden Ansprüche,
**dadurch gekennzeichnet, dass**
in Schritt (i) mittels der Pumpe (30) ein Speicherdruck in dem Pufferbehälter (27) aufgebaut wird, der wenigstens 9 bar, bevorzugt wenigstens 17 bar, weiter bevorzugt wenigstens 25 bar und besonders bevorzugt etwa 28 bar oder mehr beträgt,
und/oder
dass in Schritt (i) mittels der Pumpe (30) ein Speicherdruck in dem Pufferbehälter (27) aufgebaut wird, der wenigstens 70%, bevorzugt wenigstens 80% und besonders bevorzugt wenigstens 90% des für eine Behandlung vorgesehenen Betriebsdrucks der Behandlungskammer (13) beträgt.

5. Verfahren nach Anspruch 4,
**dadurch gekennzeichnet, dass**
das Fördern von Schutzgas aus der Behandlungskammer (13) in den Pufferbehälter (27) in Schritt (i) nach Erreichen des Speicherdrucks in dem Pufferbehälter (27) beendet wird und nach dem Beenden des Förderns eine Ablassöffnung der Behandlungskammer (13) geöffnet wird, um restliches Schutzgas, insbesondere gesteuert, in die Atmosphäre abzulassen.

6. Verfahren nach zumindest einem der vorstehenden Ansprüche,
**dadurch gekennzeichnet, dass**
in Schritt (ii) mittels der Pumpe (30) ein Vorverdichtungsdruck in der Behandlungskammer (13) aufgebaut wird, der wenigstens 9 bar, bevorzugt wenigstens 17 bar, weiter bevorzugt wenigstens 25 bar und besonders bevorzugt etwa 28 bar oder mehr beträgt,
und/oder
dass in Schritt (ii) mittels der Pumpe (30) ein Vorverdichtungsdruck in der Behandlungskammer (13) aufgebaut wird, der wenigstens 70%, bevorzugt wenigstens 80% und besonders bevorzugt wenigstens 90% des für eine Behandlung vorgesehenen Betriebsdrucks der Behandlungskammer (13) beträgt.

7. Verfahren nach Anspruch 6,
**dadurch gekennzeichnet, dass**
das Fördern von Schutzgas aus dem Pufferbehälter (27) in die Behandlungskammer (13) in Schritt (ii) nach Erreichen des Vorverdichtungsdrucks in der Behandlungskammer (13) beendet wird und nach dem Beenden des Förderns eine Verbindung der Behandlungskammer (13) mit einer Schutzgasquelle (21) hergestellt wird, um ausgehend vom Vorverdichtungsdruck einen Betriebsdruck aufzubauen, bevorzugt einen Betriebsdruck von wenigstens 10 bar, weiter bevorzugt einen Betriebsdruck von wenigstens 18 bar und besonders bevorzugt einen Betriebsdruck zwischen 20 bar und 40 bar.

8. Verfahren nach zumindest einem der vorstehenden Ansprüche,
**dadurch gekennzeichnet, dass**
die Behandlungskammer (13) vor einer Befüllung mit Schutzgas verschlossen wird und der Druck in der Behandlungskammer (13) mittels einer Vakuumpumpe (38) gegenüber dem Atmosphärendruck abgesenkt wird, vorzugsweise bis zu einem Restdruck von höchstens 50 mbar.

9. Vorrichtung (11) zur Behandlung von Lebensmitteln, insbesondere mittels eines Verfahrens gemäß einem der vorstehenden Ansprüche,
mit einer gasdicht verschließbaren Behandlungskammer (13) zum Lagern der Lebensmittel für eine vorgegebene Zeitdauer in einer Atmosphäre aus einem unter erhöhtem Druck stehenden Schutzgas, wobei die Behandlungskammer (13) einen Anschluss für eine Schutzgasquelle (21) zum Befüllen der Behandlungskammer (13) mit Schutzgas umfasst, und
einem Pufferbehälter (27), der über wenigstens eine absperrbare Verbindungsleitung (23, 25) mit der Behandlungskammer (13) verbindbar ist,
**gekennzeichnet durch**
eine Pumpe (30), die mit der Behandlungskammer (13) und mit dem Pufferbehälter (27) in Verbindung steht und in der Lage ist, je nach Betriebszustand der Vorrichtung (11) Schutzgas aus der Behandlungskammer (13) in den Pufferbehälter (27) zu fördern oder umgekehrt Schutzgas aus dem Pufferbehälter (27) in die Behandlungskammer (13) zu fördern.

10. Vorrichtung nach Anspruch 9,
**dadurch gekennzeichnet, dass**
der Pufferbehälter (27) einen Rauminhalt aufweist, der mindestens 10% und höchstens 90%, vorzugsweise mindestens 25% und höchstens 75% des Rauminhalts der Behandlungskammer (13) beträgt.

11. Vorrichtung nach Anspruch 9 oder 10,
**dadurch gekennzeichnet, dass**
die Pumpe (30) mehrstufig ist.

12. Vorrichtung nach zumindest einem der Ansprüche 9 bis 11,
**dadurch gekennzeichnet, dass**
die Pumpe (30) dafür ausgelegt ist, in der Behandlungskammer (13) einen Vorverdichtungsdruck von wenigstens 9 bar, bevorzugt von wenigstens 17 bar, weiter bevorzugt von wenigstens 25 bar und besonders bevorzugt von etwa 28 bar oder mehr aufzubauen und/oder dass
die Pumpe (30) dafür ausgelegt ist, in der Behandlungskammer (13) einen Vorverdichtungsdruck von wenigstens 70%, bevorzugt von wenigstens 80% und besonders bevorzugt von wenigstens 90% des für eine Behandlung vorgesehenen Betriebsdrucks der Behandlungskammer (13) aufzubauen.

13. Vorrichtung nach zumindest einem der Ansprüche 9 bis 12,
**dadurch gekennzeichnet, dass**
die Pumpe (30) dafür ausgelegt ist, in dem Pufferbehälter (27) einen Speicherdruck von wenigstens 9 bar, bevorzugt von wenigstens 17 bar, weiter bevorzugt von wenigstens 25 bar und besonders bevorzugt von etwa 28 bar aufzubauen und/oder dass
die Pumpe (30) dafür ausgelegt ist, in dem Pufferbehälter (27) einen Speicherdruck von wenigstens 80% und vorzugsweise von wenigstens 90% des für eine Behandlung vorgesehenen Betriebsdrucks der Behandlungskammer (13) aufzubauen.

14. Vorrichtung nach zumindest einem der Ansprüche 9 bis 13,
**dadurch gekennzeichnet, dass**
der Pufferbehälter (27) eine Anordnung aus mehreren miteinander verbundenen Einzelbehältern (29) umfasst.

## Claims

1. A method of treating foods in which the foods are stored for a predefined time period in a treatment chamber (13) which can be closed in a gas-tight manner and in which a protective gas under elevated pressure is present, with the protective gas being led away from the treatment chamber (13) after a storage process and the treatment chamber (13) again being filled with protective gas for a subsequent storage process,
wherein, for a protective gas recovery,
(i) at least some of the protective gas to be led away from the treatment chamber (13) is conveyed into a buffer container (27) by means of a pump (30),
**characterized in that**,
(ii) for the subsequent storage process, protective gas is conveyed from the buffer container (27) into the treatment chamber (13) by means of a pump (30), with the conveying of protective gas to be led away from the treatment chamber (13) into the buffer container (27), on the one hand, and the conveying of protective gas from the buffer container (27) into the treatment chamber (13), on the other hand, being performed by means of the same pump (30).

2. A method in accordance with claim 1,
**characterized in that**,
to lead the protective gas away from the treatment chamber (13), a pressure equalization is first brought about between the treatment chamber (13) and the buffer container (27) when a pressure drop exists with respect to the buffer container (27) and further protective gas is only afterwards conveyed into the buffer container (27) by means of the pump (30).

3. A method in accordance with claim 1 or claim 2,
**characterized in that**,
to fill the treatment chamber (13) with protective gas, a pressure equalization is first brought about between the buffer container (27) and the treatment chamber (13) when a pressure drop exists with respect to the treatment chamber (13) and further protective gas is only afterwards conveyed into the treatment chamber (13) by means of the pump (30).

4. A method in accordance with at least one of the preceding claims,
**characterized in that**,
in step (i), a storage pressure is built up in the buffer container (27) by means of the pump (30) that amounts to at least 9 bar, preferably to at least 17 bar, further preferably to at least 25 bar, and particularly preferably to approximately 28 bar or more;
and/or
**in that**, in step (i), a storage pressure is built up in the buffer container (27) by means of the pump (30) that amounts to at least 70%, preferably to at least 80%, and particularly preferably to at least 90%, of the operating pressure of the treatment chamber (13) provided for a treatment.

5. A method in accordance with claim 4,
**characterized in that**
the conveying of protective gas from the treatment chamber (13) into the buffer container (27) is ended in step (i) after reaching the storage pressure in the buffer container (27) and an outlet opening of the treatment chamber (13) is opened after the conveying is ended in order to release the remaining protective gas into the atmosphere, in particular in a controlled manner.

6. A method in accordance with at least one of the preceding claims,
**characterized in that**,
in step (ii), a pre-compression pressure is built up in the treatment chamber (13) by means of the pump (30) that amounts to at least 9 bar, preferably to at least 17 bar, further preferably to at least 25 bar, and particularly preferably to approximately 28 bar or more;
and/or
**in that**, in step (ii), a pre-compression pressure is built up in the treatment chamber (13) by means of the pump (30) that amounts to at least 70%, preferably to at least 80%, and particularly preferably to at least 90%, of the operating pressure of the treatment chamber (13) provided for a treatment.

7. A method in accordance with claim 6,
**characterized in that**
the conveying of protective gas from the buffer container (27) into the treatment chamber (13) is ended in step (ii) after reaching the pre-compression pressure in the treatment chamber (13) and a connection of the treatment chamber (13) to a protective gas source (21) is established after the conveying is ended in order to build up an operating pressure starting from the pre-compression pressure, preferably an operating pressure of at least 10 bar, further preferably an operating pressure of at least 18 bar, and particularly preferably an operating pressure between 20 bar and 40 bar.

8. A method in accordance with at least one of the preceding claims,
**characterized in that**
the treatment chamber (13) is closed before a filling with protective gas and the pressure in the treatment chamber (13) is lowered with respect to the atmospheric pressure by means of a vacuum pump (38), preferably to a residual pressure of at most 50 mbar.

9. An apparatus (11) for treating foods, in particular by means of a method in accordance with any one of the preceding claims,
comprising a treatment chamber (13) which can be closed in a gas-tight manner for storing the foods for a predefined time period in an atmosphere of a protective gas under elevated pressure, with the treatment chamber (13) comprising a connector for a protective gas source (21) for filling the treatment chamber (13) with protective gas; and
a buffer container (27) which can be connected to the treatment chamber (13) via at least one connection line (23, 25) which can be shut off,
**characterized by**
a pump (30) which is in communication with the treatment chamber (13) and with the buffer container (27) and which, depending on the operating state of the apparatus (11), can convey protective gas from the treatment chamber (13) into the buffer container (27) or, vice versa, can convey protective gas from the buffer container (27) into the treatment chamber (13).

10. An apparatus in accordance with claim 9,
**characterized in that**
the buffer container (27) has a volume which amounts to at least 10% and at most 90%, preferably to at least 25% and at most 75%, of the volume of the treatment chamber (13).

11. An apparatus in accordance with claim 9 or claim 10,
**characterized in that**
the pump (30) is a multi-stage pump.

12. An apparatus in accordance with at least one of the claims 9 to 11,
**characterized in that**
the pump (30) is configured to build up a pre-compression pressure in the treatment chamber (13) of at least 9 bar, preferably of at least 17 bar, further preferably of at least 25 bar, and particularly preferably of approximately 28 bar or more; and/or **in that**
the pump (30) is configured to build up a pre-compression pressure in the treatment chamber (13) of at least 70%, preferably of at least 80%, and particularly preferably of at least 90%, of the operating pressure of the treatment chamber (13) provided for a treatment.

13. An apparatus in accordance with at least one of the claims 9 to 12,
**characterized in that**
the pump (30) is configured to build up a storage pressure in the buffer container (27) of at least 9 bar, preferably of at least 17 bar, further preferably of at least 25 bar, and particularly preferably of about 28 bar; and/or **in that**
the pump (30) is configured to build up a storage pressure in the buffer container (27) of at least 80%, and preferably of at least 90%, of the operating pressure of the treatment chamber (13) provided for a treatment.

14. An apparatus in accordance with at least one of the claims 9 to 13,
**characterized in that**
the buffer container (27) comprises an arrangement of a plurality of mutually connected individual containers (29).

## Revendications

1. Procédé de traitement de denrées alimentaires, dans lequel les denrées alimentaires sont stockées pendant une durée prédéterminée dans une chambre de traitement (13) qui peut être fermée de manière étanche aux gaz et dans laquelle se trouve un gaz protecteur sous pression élevée, le gaz protecteur étant évacué hors de la chambre de traitement (13) après une opération de stockage, et la chambre de traitement (13) étant remplie à nouveau de gaz protecteur pour une opération de stockage suivante, dans lequel, en vue d'une récupération de gaz protecteur
(i) une partie au moins du gaz protecteur à évacuer hors de la chambre de traitement (13) est convoyée jusque dans un récipient tampon (27) au moyen d'une pompe (30),
**caractérisé en ce que**
(ii) pour l'opération de stockage suivante, le gaz protecteur est convoyé depuis le récipient tampon (27) jusque dans la chambre de traitement (13) au moyen d'une pompe (30), le convoyage du gaz protecteur à évacuer depuis la chambre de traitement (13) jusque dans le récipient tampon (27) d'une part et le convoyage du gaz protecteur depuis le récipient tampon (27) jusque dans la chambre de traitement (13) d'autre part étant effectués au moyen de la même pompe (30).

2. Procédé selon la revendication 1,
**caractérisé en ce que**
pour évacuer le gaz protecteur hors de la chambre de traitement (13), une compensation de pression entre la chambre de traitement (13) et le récipient tampon (27) est d'abord provoquée en présence d'une chute de pression vers le récipient tampon (27), et ce n'est qu'ensuite qu'un autre gaz protecteur est convoyé jusque dans le récipient tampon (27) au moyen de la pompe (30).

3. Procédé selon la revendication 1 ou 2,
**caractérisé en ce que**
pour remplir la chambre de traitement (13) avec du gaz protecteur, une compensation de pression entre le récipient tampon (27) et la chambre de traitement (13) est d'abord provoquée en présence d'une chute de pression vers la chambre de traitement (13), et ce n'est qu'ensuite qu'un autre gaz protecteur est convoyé jusque dans la chambre de traitement (13) au moyen de la pompe (30).

4. Procédé selon l'une au moins des revendications précédentes,
**caractérisé en ce que**
à l'étape (i), une pression de stockage est établie dans le récipient tampon (27) au moyen de la pompe (30), qui est d'au moins 9 bar, de préférence d'au moins 17 bar, de manière particulièrement préférée d'au moins 25 bar et de préférence particulière d'environ 28 bar ou plus,
et/ou
à l'étape (i), une pression de stockage est établie dans le récipient tampon (27) au moyen de la pompe (30), qui est au moins de 70 %, de préférence d'au moins 80 % et de manière particulièrement préférée d'au moins 90 % de la pression de fonctionnement, prévue pour un traitement, de la chambre de traitement (13).

5. Procédé selon la revendication 4,
**caractérisé en ce que**
le convoyage de gaz protecteur depuis la chambre de traitement (13) jusque dans le récipient tampon (27) à l'étape (i) est terminé une fois que la pression de stockage dans le récipient tampon (27) est atteinte, et une fois que le convoyage est terminé, un orifice d'évacuation de la chambre de traitement (13) est ouvert pour évacuer vers l'atmosphère en particulier de façon contrôlée le gaz protecteur restant.

6. Procédé selon l'une au moins des revendications précédentes,
**caractérisé en ce que**
à l'étape (ii), une pression de précompression est établie dans la chambre de traitement (13) au moyen de la pompe (30), qui est d'au moins 9 bar, de préférence d'au moins 17 bar, de manière particulièrement préférée d'au moins 25 bar et de préférence particulière d'environ 28 bar ou plus,
et/ou
à l'étape (ii), une pression de précompression est établie dans la chambre de traitement (13) au moyen de la pompe (30), qui est au moins de 70 %, de préférence d'au moins 80 % et de manière particulièrement préférée d'au moins 90 % de la pression de fonctionnement, prévue pour un traitement, de la chambre de traitement (13).

7. Procédé selon la revendication 6,
**caractérisé en ce que**
le convoyage de gaz protecteur depuis le récipient tampon (27) jusque dans la chambre de traitement (13) à l'étape (ii) est terminé une fois que la pression de précompression dans la chambre de traitement (13) est atteinte, et une fois que le convoyage est terminé, une communication de la chambre de traitement (13) avec une source de gaz protecteur (21) est établie pour établir à partir de la pression de précompression une pression de fonctionnement, de préférence une pression de fonctionnement d'au moins 10 bar, de manière particulièrement préférée une pression de fonctionnement d'au moins 18 bar et de préférence particulière une pression de fonctionnement comprise entre 20 bar et 40 bar.

8. Procédé selon l'une au moins des revendications précédentes,
**caractérisé en ce que**
la chambre de traitement (13) est fermée avant d'être remplie de gaz protecteur, et la pression dans la chambre de traitement (13) est réduite au moyen d'une pompe à vide (38) à une pression inférieure à la pression atmosphérique, de préférence à une pression résiduelle de 50 mbar au maximum.

9. Dispositif (11) de traitement de denrées alimentaires, en particulier par un procédé selon l'une des revendications précédentes,
comportant une chambre de traitement (13) pouvant être fermée de manière étanche aux gaz et destinée à stocker les denrées alimentaires pendant une durée prédéterminée dans une atmosphère d'un gaz protecteur sous pression élevée, la chambre de traitement (13) comprenant un raccord pour une source de gaz protecteur (21) pour remplir la chambre de traitement (13) avec le gaz protecteur, et un récipient tampon (27) susceptible d'être relié à la chambre de traitement (13) par au moins une conduite de liaison (23, 25) obturable,
**caractérisé par**
une pompe (30) qui est en communication avec la chambre de traitement (13) et avec le récipient tampon (27) et qui est capable de convoyer le gaz protecteur depuis la chambre de traitement (13) jusque dans le récipient tampon (27), ou pour convoyer inversement le gaz protecteur depuis le récipient tampon (27) jusque dans la chambre de traitement (13), en fonction de l'état de fonctionnement du dispositif (11).

10. Dispositif selon la revendication 9,
**caractérisé en ce que**
le récipient tampon (27) présente un volume qui est au minimum de 10 % et au maximum de 90 %, de préférence au minium de 25 % et au maximum de 75 % du volume de la chambre de traitement (13).
de l'état de fonctionnement du dispositif (11).

11. Dispositif selon la revendication 9 ou 10,
**caractérisé en ce que**
la pompe (30) est à plusieurs étages.

12. Dispositif selon l'une au moins des revendications 9 à 11,
**caractérisé en ce que**
la pompe (30) est conçue pour établir dans la chambre de traitement (13) une pression de précompression qui est d'au moins 9 bar, de préférence d'au moins 17 bar, de manière particulièrement préférée d'au moins 25 bar et de préférence particulière d'environ 28 bar ou plus,
et/ou **en ce que**
la pompe (30) est conçue pour établir dans la chambre de traitement (13) une pression de précompression qui est d'au moins 70 %, de préférence d'au moins 80 % et de manière particulièrement préférée d'au moins 90 % de la pression de fonctionnement, prévue pour un traitement, de la chambre de traitement (13).

13. Dispositif selon l'une au moins des revendications 9 à 12,
**caractérisé en ce que**
la pompe (30) est conçue pour établir dans le récipient tampon (27) une pression de stockage qui est d'au moins 9 bar, de préférence d'au moins 17 bar, de manière particulièrement préférée d'au moins 25 bar et de préférence particulière d'environ 28 bar,
et/ou **en ce que**
la pompe (30) est conçue pour établir dans le récipient tampon (27) une pression de stockage qui est d'au moins 80 % et de préférence d'au moins 90 % de la pression de fonctionnement, prévue pour un traitement, de la chambre de traitement (13).

14. Dispositif selon l'une au moins des revendications 9 à 13,
**caractérisé en ce que**
le récipient tampon (27) comprend un ensemble de plusieurs récipients individuels (29) reliés entre eux.
